# EUROPÄISCHE PATENTSCHRIFT

(11) **EP 2 885 364 B1**
(45) Veröffentlichungstag und Bekanntmachung des Hinweises auf die Patenterteilung: **10.04.2019**
(21) Anmeldenummer: 13763178.4
(22) Anmeldetag: 13.08.2013
(51) Int. Cl.: C09J 133/06

(54) **KLEBEMITTEL MIT KLEBSTOFFBLEND AUS ACRYLAT UND STYROL-BLOCK-COPOLYMER**
ADHESIVE AGENT HAVING ADHESIVE BLEND OF ACRYLATE AND STYRENE BLOCK COPOLYMER
COLLE DOTÉE D'UN MÉLANGE ADHÉSIF CONSTITUÉ D'ACRYLATE ET D'UN COPOLYMÈRE SÉQUENCÉ DE STYRÈNE

(30) Priorität: 16.08.2012 DE 102012016186
(43) Veröffentlichungstag der Anmeldung: 24.06.2015
(73) Patentinhaber: Lohmann GmbH & Co. KG, 56567 Neuwied (DE)
(72) Erfinder: KOPF, Patrik, 56567 Neuwied (DE); PETRICK, Patricia, 56355 Oberbachheim (DE); KAMELGAN, Axel, 51643 Gummersbach (DE)
(74) Vertreter: Molnia, David
(86) Internationale Anmeldenummer: PCT/DE2013/000454
(87) Internationale Veröffentlichungsnummer: WO 2014/026668

(56) Entgegenhaltungen:
- EP-A1- 1 995 288
- WO-A1-01/59024

## Beschreibung

Bei der vorliegenden Erfindung handelt es sich um ein trägerbasiertes, ein- oder doppelseitig haftklebend ausgerüstetes oder auch trägerloses Haftklebemittel in Form eines Klebestreifens oder Stanzteils mit einem Haftklebstoff bestehend im wesentlichen aus einem bevorzugt in einem Lösemittelprozess hergestellten Blend aus Polyacrylat und einem synthetischen Kautschuk sowie einem oder mehreren Klebharzen. Gegenüber bisher bekannten Klebesystemen weist ein derartiges Klebemittel eine deutliche Verbesserung der Adhäsion auf harten, unpolaren Oberflächen wie z.B. neuartigen Lackoberflächen der Automobilindustrie auf.

Bezüglich der allgemeinen Eigenschaften, die Haftklebstoffe charakterisieren, sowie bezüglich der bekannten Arten von Haftklebstoffen und der üblicherweise eingesetzten Bestandteile sei an dieser Stelle auf die einschlägigen Werke aus der Literatur verwiesen, wie sie z.B. auch in der unten noch näher behandelten EP 1263913 B1 erwähnt werden.

Lacke, die heute bevorzugt zur Lackierung von Oberflächen insbesondere im Automobilbereich Verwendung finden, müssen immer höheren Anforderungen an z.B. Kratzfestigkeit, Glanz oder Wärme- bzw. Lösemittelbeständigkeit genügen und sie selbst sollten unter Umweltgesichtspunkten lösemittelfrei sein. Insbesondere im Hinblick auf den letztgenannten Punkt werden auch neue Fertigungsverfahren eingesetzt wie das der Pulverbeschichtung, wodurch der Einsatz von Lösemitteln entfällt und auch die Nanopartikel-Technologie findet stärkeren Einsatz. Darüber hinaus gibt es derzeit Bestrebungen, Lackoberflächen selbstheilend zu gestalten, d.h. dass sich Kratzer z.B. bei Einwirkung hoher Temperaturen selbst reparieren.

Als Folge dieser Entwicklung sind insbesondere die obersten Lackschichten heute härter, d.h. es werden stark vernetzte Systeme - oft mit Polysiloxanen und anderen Additiven versehen - eingesetzt, die eine wesentlich geringere Oberflächenenergie besitzen, als frühere Lackoberflächen.

Blends aus Polyacrylaten und Kautschuk unter Zugabe von Harzen sind in der Patentliteratur bekannt. Vielfach handelt es sich dabei um Heissschmelz- oder Strukturklebmassen, bei den ermittelten Haftklebmassen handelt es sich vorwiegend um Klebmassen mit von der erfindungsgemäßen Klebmasse verschiedenen Rezepturen, Herstellungsweisen und Eigenschaften: Die hier vorliegenden herausragenden Eigenschaften des erfindungsgemäßen Klebemittels durch das Blenden von an sich inkompatiblen Bestandteilen wurden bisher noch nicht beschrieben. So ist auch das Extruderverfahren die bisher wohl bevorzugte Herstellungsweise, was daher rührt, dass Blends in dieser Weise relativ einfach hergestellt werden können, indem sich Polymere im Sinne einer homogenen Masse miteinander vermischen lassen, die sich bei anderen Herstellungsverfahren nicht mischen würden.

So beschreibt EP 1263913 B1 ein Polyacrylat und eine thermoplastische, auf einem Elastomer basierende Klebstoffkomponente, welche ein sternförmiges assymetrisches Styrolblockcopolymer und ein Harz umfasst. Diese beiden Klebstoffkomponenten werden im Verhältnis 70:30 im Extruderverfahren gemischt, die Vernetzung erfolgt durch Elektronenstrahl und der resultierende Klebstoff zeichnet sich durch gutes Scher- bzw. Schälverhalten, gute Haftung bei niedrigen Temperaturen sowie sauberes Ablösen nach Einwirkung hoher Temperaturen aus.

WO 2008070386 A1 beansprucht ein Styrolblockcopolymer, das auch sternförmig sein kann, in einem Extruder vermischt mit 0,1 bis weniger als 10 Gew.-% einer Acrylatkomponente, wodurch eine bessere Verklebung auf unpolaren Oberflächen erreicht werden soll.

EP 0868498 B1 spezifiziert eine Klebmasse, die dadurch gekennzeichnet ist, dass sie aus einer Haftkleber-Komponente sowie wahlweise einer thermoplastischen oder elastomeren oder klebrig gemachten elastomeren oder thermoplastischen elastomeren Komponente besteht, wobei bei Einsatz einer thermoplastischen elastomeren Komponente der Haftkleber kein acrylisches Material sein darf.

WO 1996025469 A1 behandelt anisotrope Klebmassen durch Blending von Thermoplasten und sonstigen Materialien in die Klebmasse. Dies geschieht mittels Extruder und Düsenbeschichtung, denn nur dann hat man eine "Richtung" in der Klebmasse und damit Anisotropie erzeugt.

WO 2010069800 A1 beschreibt eine Haftklebmasse aus einer homogenen Mischung mindestens einer Naturkautschukkomponente und mindestens einer Polyacrylatkomponente, hergestellt in einem Extruder, wobei die Vernetzung im Anschluss an das Ausformen des Gemisches mittels Elektronenstrahlhärtung erfolgt.

Keine dieser Schriften aber beschreibt eine Klebmasse und deren Zusammensetzung bzw. ein unter Verwendung dieser Klebmasse hergestelltes Klebemittel mit einer so hohen Adhäsion und Kohäsion auf neuartigen Lackoberflächen sowie einer solch hohen Wärmebeständigkeit, wie sie für die erfindungsgemäße Klebmasse und damit hergestellte Klebemittel kennzeichnend sind. Der vorliegende Blend kombiniert die im allgemeinen von Kautschuksynthesen bekannte gute Adhäsion auf üblicherweise schwierig zu verklebenden Untergründen mit der hohen Kohäsion und Temperaturbeständigkeit, wie sie im allgemeinen von Polyacrylathaftklebmassen bekannt sind. Dabei sind die erfindungsgemäßen Blends keine bloße Kombination der zugrunde liegenden Klebmassen, denn wie die unten aufgeführten Beispiele belegen, klebt die darin enthaltene Kautschukklebmasse nur schlecht bis gar nicht und die ebenfalls darin enthaltene Acrylatklebmasse ist zwar kohäsiv und temperaturbeständig, klebt aber nicht gut auf Lack. Die Blends aber kleben überraschenderweise sehr gut und weisen darüber hinaus eine hohe Wärmebeständigkeit auf, was für den Fachmann aus den verwendeten Komponenten nicht ersichtlich ist.

Grundsätzlich können Kautschuke für Klebmassen unterteilt werden in Naturkautschuke und Synthesekautschuke.

Nach DIN 53501 bezeichnet man unvernetzte, aber vernetzbare Polymere mit gummielastischen Eigenschaften bei Raumtemperatur als Kautschuke. Naturkautschuk besteht aus dem Monomer Isopren (2-Methyl-1,3-butadien, C₅H₈), das in extrem einheitlicher Struktur zum Terpen cis-1,4-Polyisopren polymerisiert ist. Es wird den Polyterpenen zugeordnet. Naturkautschuk ist längerkettig als alle Synthesekautschuke, nicht schmelzbar und nur mit Zusätzen vernetzbar, daher für die vorliegenden Zwecke weniger geeignet.

WO 01/59024 A1 zeigt verträglichgemachte drucksensitive Klebemittel.

Synthesekautschuke sind makromolekulare Stoffe synthetischen Ursprungs. Sie haben kürzere Ketten, sind deshalb schmelzbar oder sogar flüssig und daher für die Herstellung der erfindungsgemäßen Klebmasse besser geeignet. Grundsätzlich sind zur Herstellung der vorliegenden Klebmasse alle Arten der Synthesekautschuke einsetzbar, d.h. Styrol-Butadien-Kautschuk (SBR), Polybutadien (BR), Isopren-Kautschuk (IR), Acrylnitril-Butadien-Kautschuk (NBR), Chloropren-Kautschuk (CR) oder Butylkautschuk (IIR), um die wichtigsten hier zu nennen. Diese Arten treten bezüglich ihrer Topologie in linearer, verzweigter oder sternförmiger Form auf. Bevorzugt eingesetzt werden hier lineare Styrol-Blockcopolymere (SBC), d.h. synthetische Polymere aus zwei "harten" Styrolendblöcken und Isopren (SIS) oder Butadien (SBS) oder auch Mischungen wie Ethylen-Butylen (SEBS) als "weichen" Mittelblöcken. SBCs sind im Zusammenhang mit Klebstoffen als Komponenten sehr geeignet, weil sich bei niedriger Temperatur die S-Blöcke verschiedener Moleküle zusammen lagern und eine Phase bilden. Deshalb hält dieser Kautschuk bei Raumtemperatur gut zusammen, er ist sehr kohäsiv. Bei höheren Temperaturen ab ca. 80° C. lösen sich die S-Blöcke voneinander, der Kautschuk beginnt zu schmelzen, die Kohäsion versagt. Aus diesem Grunde sind SBCs bevorzugte Kautschuke in Hotmelt-Klebstoffen.

Polyacrylate sind polymere Ester der Acrylsäure sowie von Acrylsäurederivaten mit Alkoholen. Sie sind Grundlage vieler Klebstoffmassen. Als Polyacrylatkomponente im Sinne dieser Erfindung wird jede Verbindung bezeichnet, die aus einem Polymer besteht, dessen Grundgerüst Acrylat-Monomere aufweist.

Die Gruppe dieser Monomere besteht aus sämtlichen Verbindungen mit einer Struktur, die sich von der Struktur von unsubstituierter oder substituierter Acrylsäure oder Methacrylsäure oder aber aus Estern dieser Verbindungen herleiten lässt, die sich durch die allgemeine Formel CH2=C(R1)(COOR2) beschreiben lassen, wobei der Rest R1 ein Wasserstoffatom oder eine Methylgruppe sein kann, der Rest R2 kann ein Wasserstoffatom sein oder aber aus der Gruppe der gesättigten, unverzweigten oder verzweigten, substituierten oder unsubstituierten C1- bis C30-Alkylgruppen ausgewählt werden.

Geeignete Monomerbausteine sind beschrieben im Kapitel "Acrylic Adhesives", in: Donatas Satas, "Handbook of Pressure Sensitive Adhesive Technology", Second Edition, edited by Donatas Satas, Van Nostrand Reinhold New York, Seiten 396 bis 456. So können etwa als acrylatartige Monomere auch solche Acryl- und Methacrylsäureester eingesetzt werden, bei denen der Rest R2 aus der Gruppe der gesättigten, unverzweigten oder verzweigten, substituierten oder unsubstituierten C4- bis C14-Alkylgruppen, insbesondere C4- bis C9-Alkygruppen, gewählt ist. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigte Isomere, beispielsweise Isobutylacrylat, 2-Ethylhexylacrylat, 2-Ethylhexylmethacrylat, Isooctylacrylat, Isooctylmethacrylat sowie Cyclohexylmethacrylat, Isobornylacrylat, Isobornylmethacrylat oder 3,5-Dimethyladamantylacrylat.

Die Polyacrylatkomponenten können zusätzlich weitere Monomer-Einheiten mit funktionellen Gruppen enthalten. Durch diese funktionellen Gruppen können beispielsweise die Glasübergangstemperatur, die Adhäsionsneigung und die Vernetzbarkeit gesteuert werden. Solche funktionelle Gruppen enthaltenden Vinylverbindungen sind Acrylsäure, Methacrylsäure, Maleinsäureanhydrid, Styrol, Styrol-Verbindungen, Vinylacetat, (Meth)acrylamide, N-substituierte (Meth)acrylamide, β-Acryloyloxypropionsäure, Vinylessigsäure, Fumarsäure, Crotonsäure, Aconitsäure, Dimethylacrylsäure, Trichloracrylsäure, Itaconsäure, Vinylacetat, Hydroxyalkyl(meth)acrylat, aminogruppenhaltige (Meth)acrylate, hydroxygruppenhaltige (Meth)acrylate, besonders bevorzugt 2-Hydroxyethyl(meth)acrylat, 2-Hydroxypropyl-(meth)acrylat, und/oder 4-Hydroxybutyl(meth)acrylat, um einige nicht abschließende Beispiele zu nennen.

Die Polyacrylatkomponenten enthalten üblicherweise 0 bis 10 Gew.-% dieser zusätzlichen Monomereinheiten, es wird entweder ausschließlich eine zusätzliche Monomereinheit oder es werden Mischungen derselben verwendet.

Die Eigenschaften der Polyacrylatkomponente werden überwiegend durch die Auswahl der Monomere, das erzielte Molekulargewicht und die Art und Menge des gewählten Vernetzers bestimmt. Geeignete Monomerbausteine und Vernetzungsreagenzien sind beschrieben im oben bereits erwähnten Kapitel "Acrylic Adhesives", in: Donatas Satas, "Handbook of Pressure Sensitive Adhesive Technology", Second Edition, edited by Donatas Satas, Van Nostrand Reinhold New York, Seiten 396 bis 456.

Die erzielte Glasübergangstemperatur hängt von den eingesetzten Monomeren ab. Die für die erfindungsgemäßen Klebmasseen verwendeten Polyacrylatkomponenten weisen im getrockneten Zustand Glasübergangstemperaturen insbesondere zwischen -80° C. und +25° C., bevorzugt zwischen -50° C. und +10° C. und besonders bevorzugt zwischen -40° C. und 0° C. auf.

Für die Polyacrylatkomponenten ist es besonders vorteilhaft, wenn die Zusammensetzung der entsprechenden Monomere derart gewählt wird, dass die resultierenden Klebmassen entsprechend D. Satas, "Handbook of Pressure Sensitive Adhesive Technology", 1989, Verlag VAN NOSTRAND REINHOLD, New York] haftklebende Eigenschaften besitzen. Hierfür sollte die Glasübergangstemperatur der Polyacrylatkomponente zum Beispiel unterhalb 25° C. liegen und das Dahlquist Kriterium erfüllt sein.

Die für die Erfindung herangezogenen Polyacrylatkomponenten werden bevorzugt durch eine radikalisch initiierte Polymerisation hergestellt. Die freie radikalische Polymerisation kann in Gegenwart eines organischen Lösemittels oder in Gegenwart von Wasser oder in Gemischen aus organischen Lösemitteln und Wasser oder in Substanz durchgeführt werden. Bevorzugt wird so wenig Lösemittel wie möglich eingesetzt. Üblicherweise wird unter Stickstoffatmosphäre polymerisiert. Die Polymerisationszeit beträgt - je nach Umsatz und Temperatur - zwischen sechs und 48 h.

Bei der Lösemittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösemittel verwendet. Für die Polymerisation in wässrigen Medien bzw. Gemischen aus organischen und wässrigen Lösemitteln werden zur Polymerisation die dem Fachmann zu diesem Zwecke bekannten Emulgatoren und Stabilisatoren zugesetzt. Als Polymerisationsinitiatoren werden übliche radikalbildende Verbindungen wie beispielsweise Peroxide, Azoverbindungen und Peroxosulfate eingesetzt. Auch Initiatorgemische können verwendet werden. Bei der Polymerisation können weitere Regler zur Molekulargewichtssenkung und Verringerung der Polydispersität zugefügt werden. Als sogenannte Polymerisationsregler können beispielsweise Alkohole und Ether Verwendung finden. Das mittlere Molekulargewicht Mw der Acrylathaftklebmassen liegt vorteilhaft zwischen 200.000 und 2.000.000 g/mol, mehr bevorzugt zwischen 400.000 und 1.000.000 g/mol.

Die für die Erfindung vorteilhaften Lösemittel sind eher oder überwiegend unpolar. Es ist ein Lösemittel oder -gemisch zu wählen, in dem sowohl die Polyacrylatkomponente als auch die Kautschukkomponente löslich sind. Vorteilhaft sind dabei zum Beispiel Benzin, Toluol oder n-Hexan. Beimischungen von polareren Lösemitteln wie z.B. Aceton oder Isopropanol können die Löslichkeiten und damit die innige Vermischung der Komponenten verbessern.

Der Feststoffgehalt der Polyacrylatkomponenten bei Lösemittelpolymerisation liegt erfindungsgemäß insbesondere zwischen 30 und 70 Gew.-%, bevorzugt zwischen 45 und 60 Gew.-%.

Zur Verbesserung der Eigenschaften von Polyacrylaten als Haftklebstoffe werden diese üblicherweise nach dem Beschichten vernetzt. Als Vernetzungsmechanismen kommen dabei eine chemische Vernetzung (z.B. kovalente Verbindungen) oder eine physikalische Vernetzung (Domänenbildung) in Frage. Die Vernetzung kann dabei durch thermische Einflüsse, z.B. beim Trockenprozess der lösemittelhaltigen Klebmasse oder durch Strahlungseinflüsse (UV-Licht, Elektronenstrahlung) initiiert werden. Vernetzungsreagenzien sind dabei beispielsweise, aber nicht abschließend, mehrfunktionelle Aziridine (Handelsname z.B. Trazidin VN, Crosslinker CX-100), mehrfunktionelle Isocyanate, mehrfunktionelle Acrylate (Handelsname z.B. Laromer TMPTA), Metallchelate (z.B. Titanorganische Verbindungen, Alumniumacetylacetonat), Metallsalze (z.B. Zinksalze), mehrfunktionelle Epoxide und organische Peroxide. Üblicherweise reagieren diese Vernetzungsreagenzien mit funktionellen Gruppen oder Mehrfach- oder Einfachbindungen in den polymeren Bestandteilen der Klebmasse. Die Vernetzung kann in der vorliegenden Erfindung innerhalb der Polyacrylate stattfinden, aber auch innerhalb der weiteren Bestandteile der Klebmasse wie der Styrolblockcopolymere und der Klebharze. Die Vernetzung kann auch zwischen den Polyacrylaten und den weiteren Bestandteilen der Klebmasse erfolgen. Durch geeignete Vernetzung können sich beispielsweise Schäl- und Scherfestigkeiten, Temperatur- und Lösemittelbeständigkeiten und Wiederablösbarkeit der Klebmasse verbessern.

Einen weiteren Bestandteil der erfindungsgemäßen Klebmasse bildet zumindest ein Klebharz. Bei Klebharzen handelt es sich um klebrig machende Stoffe, mit deren Hilfe aus geeigneten Rückgratpolymeren Klebstoffe formuliert werden können, d.h. die Klebharze verleihen den Rückgratpolymeren z.B. adhäsive, benetzende und klebrig machende Eigenschaften. Eine Übersicht über Klebharze allgemein findet sich im Kapitel "Tackifier Resins", Donatas Satas, "Handbook of Pressure Sensitive Adhesive Technology, Second Edition, edited by Donatas Satas, Van Nostrand Reinhold New York, Seiten 527 bis 544.

Klebharze können grundsätzlich unterteilt werden in synthetische (z.B. Kohlenwasserstoffharze), halbsynthetische (z.B. Terpenphenolharze) und natürliche Harze und deren Derivate (Kolophoniumderivate). Die Kohlenwasserstoffharze können unterteilt werden in aliphatische Kohlenwasserstoffharze (üblicherweise synthetisiert aus dem C5-Strom der Erdölaufbereitung), aromatische Kohlenwasserstoffharze (aus dem C9-Strom der Erdölaufbereitung oder auch dem Steinkohleteer) und gemischten Harzen aus C5- und C9-Bestandteilen. Bei der Herstellung (Polymerisation) könne auch weitere Monomere beigemischt werden, wie zum Beispiel phenolische Komponenten. Desweiteren können Kohlenwasserstoffharze voll- oder teilhydriert vorliegen.

In der vorliegenden Erfindung werden mindestens eines ersten und zweiten Klebharzes in einer Menge von 20-60 Gew.-% eingesetzt, wobei das erste Klebharz ein Phenol-modifiziertes aromatisches Kohlenwasserstoffharz ist, und wobei das zweite Klebharz ein Terpenphenolharz ist.

Nachteilig bei der Verwendung von SBC-Klebmassen ist deren geringe Langzeitstabilität: Das ungesättigte Polymer ist anfällig für Oxidationsreaktionen, daher bedürfen ungesättigte Verbindungen eines Alterungsschutzes Die Langzeitstabilität dieser Systeme wird daher durch Alterungsschutzmittel eingestellt. Hinsichtlich der Alterungsschutzmittel ist grundsätzlich zu unterscheiden zwischen primären und sekundären Antioxidantien. Die primären Antioxidantien greifen kettenabbrechend in den Kettenfortpflanzungsschritt ein, während die sekundären oder präventiven Antioxidantien Hydroperoxidgruppen zerstören, welche Kettenstart oder Kettenverzweigung auslösen. Die Alterungsschutzmittel (Antioxidationsmittel, Antioxidantien) selbst sind organisch-chemische Substanzen, die einem Mischungsaufbau zugesetzt werden, um diesen vor Zersetzung, oxidativem Abbau, vorzeitiger Alterung und Autoxidation zu schützen. Solche Additive werden in nahezu sämtlichen Bereichen der chemischen und pharmazeutischen Industrie eingesetzt, um Chemikalien oder daraus hergestellte Erzeugnisse, Naturstoffe, Kunststoffe, Nahrungs- und Genußmittel, Arzneimittel und Kosmetika haltbarer zu machen. Eine Übersicht über gängige und im vorliegenden Zusammenhang prinzipiell auch verwendbare Antioxidantien findet sich z.B. in Ullmanns Encyklopädie der Technischen Chemie, 4. Auflage, Band 8, Seite 25 bis 42 (1974).

Eine sehr gute Wirkung hinsichtlich der Stabilisierung der Haftklebmasse bei höheren Temperaturen konnte im vorliegenden Falle mit Alterungsschutzmitteln aus der Gruppe der Kresole, hier insbesondere 4,6-Bis(alkylthioalkyl)-o- Kresole, vorzugsweise Irganox ® 1726, Irganox ® 1010 oder Irganox ® 1520 erzielt werden, aber auch sonstige Alterungsschutzmittel auf Basis von Phenolen wie Vulkanox ® BFK oder auch sonstige gängige Alterungsschutzmittel wie DOP (Dioctylphthalate) können hier verwendet werden.

Darüber hinaus können je nach beabsichtigtem Effekt beispielsweise zur Farbgebung oder auch als Entschäumungsmittel die üblicherweise bei der Herstellung von Haftklebstoffen zu findenden Zusätze wie Füllstoffe, Weichmacher, Verarbeitungshilfsmittel, Aktivatoren, Pigmente, Beschleuniger oder Verzögerer usw. eingesetzt werden. Insbesondere können für Blends aus Elastomeren und Polyacrylaten Lösungsvermittler zugesetzt werden, die die ansonsten unverträglichen Phasen sowohl vor der Beschichtung als auch in der späteren Klebmasseschicht auf Dauer kompatibel machen. Beispiele dazu finden sich in dem Artikel "High Performance Plastic Additives based on Controlled Architecture Material (CAM) Technology", Cernohous et al., 2003 PLACE Conference & GLOBAL HOT MELT Symposium.

Ein mit der erfindungsgemäßen Klebmasse hergestelltes Klebemittel kann als trägerbasierter, ein- oder doppelseitig haftklebend ausgerüsteter oder auch als trägerloser Klebestreifen vorliegen, daneben aber auch als Stanzteil.

Bei trägerbasierten Klebemitteln kann der Träger aus jedem der bekannten Klebeband-Trägermaterialien ausgewählt werden, also beispielsweise Papier, Folien, metallisierten Folien, Schaum, Gewebe, viskoelastischen Materialien und Kombinationen dieser genannten Materialien. Besonders geeignete Trägermaterialien sind Schäume aus PE, PP, PB, PIB, PU, PVC, EVA, EPDM, Polystyrol oder Polyacrylat.

Zur schützenden Abdeckung des Klebemittels vor dessen Gebrauch können die allseits für solche Zwecke bekannten Papiere sowie kunststoff- oder gewebebasierten Materialien Verwendung finden, bei Bedarf jeweils beschichtet mit einer die Ablösbarkeit von der Klebfläche fördernden Substanz wie z.B. Polyvinylalkohol oder Silikonen.

Bei der Herstellung der Klebmasse werden zunächst die Polyacrylatkomponente und die Synthesekautschukkomponente miteinander vermischt. In einem lösemittelfreien Verfahren kann dies zum Beispiel mittels eines Extruders dargestellt werden. Im bevorzugten Lösemittelverfahren werden die gelösten Komponenten mittels Rührer innig vermischt. Dabei können z.B. Flügelrührer, Leitstrahlmischer, Dissolver oder statische Mischer zum Einsatz kommen. Eine innige Vermischung ist dann garantiert, wenn die entstandene Dispersion intransparent, aber quasi-homogen ist. Dies kann zum Beispiel dadurch sichtbar gemacht werden, dass ein getrockneter Ausstrich der Klebemasse Phasenstrukturen zeigt, bei denen der Durchmesser der einzelnen Phasen unter 40 µm liegt.

Die Herstellung des Klebemittels kann durch eine der allseits bekannten Herstellungsmethoden erfolgen, also z.B. wahlweise mittels Rakel- oder Walzenbeschichtung oder auch mittels Düsenauftrag.

Bei den unten genannten Herstellungsbeispielen wurden folgende Testmethoden zur Validierung eingesetzt:

### 90°-Schälfestigkeit

Die Messung der 90°-Schälfestigkeit geschieht in Anlehnung an DIN ISO 1939 bei Normklima (23° C., 50% rel. Luftfeuchtigkeit) Das Substrat wird mit einem benzingetränkten Tuch abgewischt und abdampfen lassen. Ein Probenstreifen der Breite 25 mm wird auf das Substrat aufgebracht. Anschließend wird mit einer Rolle (Gewicht 5kg) zweimal über den Probestreifen gerollt (5 m/min). Der Prüfling wird 24 Stunden bei Normklima (23° C., 50% Luftfeuchtigkeit) konditioniert und anschließend wird die Kraft gemessen, die bei einem Abzugswinkel von 90° bei einer Geschwindigkeit von 50mm/min aufgewendet werden muss, um das Klebeband vom Substrat abzulösen. Bei einem Klebeband mit Schaumträger kann die Haftung der Klebmasse auf dem Substrat so hoch sein, dass sie größer ist, als die innere Festigkeit des Schaumträgers. Dann tritt ein Schaumspalten ein (abgekürzt Ssp). Bei den in den Beispielen verwendete Schaumträgern bedeutet dies, dass die Schälfestigkeit über 35 N/cm liegt. Als weitere Bruchbilder kommen Kohäsionsbruch (KB) und Normalbruch mit Rückständen auf dem Substrat (RS) vor.

### 90°-Schälfestigkeit nach Wärmelagerung

Der Prüfling wie oben beschrieben wird nach der 24-h-Lagerung bei Normklima noch zusätzlich einer Lagerung bei 90° C. im Umluftofen für 10 Tage ausgesetzt. Nach Rekonditionierung bei Normklima (24 h) wird die 90°-Schälfestigkeit wie oben beschrieben gemessen.

### 90°-Schälfestigkeit nach Feuchtwärmelagerung

Der Prüfling wie oben beschrieben wird nach der 24-h-Lagerung bei Normklima noch zusätzlich einer Lagerung bei 70° C. und gesättigter Luftfeuchte (100% rel. Feuchte) für 10 Tage ausgesetzt. Nach Rekonditionierung bei Normklima (24 h) wird die 90°-Schälfestigkeit wie oben beschrieben gemessen.

### Aufsteigender Wärmetest

Der Probestreifen (Breite 25 mm) besteht aus der Klebmasseschicht, die auf eine Polyesterfolie (Dicke von 50µm) laminiert wurde. Auf einer Edelstahlplatte (zuvor gereinigt mit Benzin) wird der Probestreifen überlappend so verklebt, dass eine Fläche von 25 mm x 25 mm verklebt ist. Anschließend wird mit einer Rolle (Gewicht 5kg) zweimal über den Probestreifen gerollt (5 m/min). Der Probestreifen wird mit 1kg vertikal belastet (Scherbelastung) und diese Anordnung in einen Umluftofen gehängt. Ein Temperaturprogramm variiert die Temperatur von 30° C. auf 150° C. in Schritten von 10 Kelvin, wobei immer nach 30 min die Temperatur jeweils um 10 Kelvin erhöht wird. Das Testergebnis ist die Maximaltemperatur, bei der die Anordnung noch gehalten wird, das Klebeband also noch nicht abgeschert ist.

### Feststoffgehalt

Der Feststoffgehalt ist der nicht verdampfbare Anteil einer Polymerlösung. Die Lösung wird eingewogen, für 60 min werden bei 105° C. im Umluftschrank die flüchtigen Bestandteile abgedampft und es wird zurückgewogen.

### Substrate:

Edelstahlplatte: Edelstahl nach Afera-Norm 4001
Lackplatte 1: Stahlblech mit 3-schichtigem Lackaufbau: Füller, Basislack und als Klarlack: 2K-Klarlack Supermar von DuPont, Trockenbedingungen: 20min bei 140° C.
Lackplatte 2: Stahlblech mit 3-schichtigem Lackaufbau: Füller, Basislack und als Klarlack: 2K-Klarlack EverGloss von der BASF, Trockenbedingungen: 20min bei 140° C.

### Materialien:

Anmerkung: "Teile" bezieht sich immer auf Gewichtsteile.
Polymer 1: Thermisch polymerisiertes lösemittelhaltiges Copolymer aus 50 Teilen n-Butylacrylat, 43,9 Teilen 2-Ethylhexylacrylat, 3,5 Teilen Acrylsäure und 2,5 Teilen Hydroxyethylacrylat. Lösemittel: Siedegrenzbenzin 60/95 und Aceton im Gewichtsverhältnis 85:15. Stickstoffatmosphäre. Initiator 0,64 Teile Azoisobuturonitril (AIBN) der Fa. DuPont. Feststoffgehalt ca. 55%. Mittleres Molekulargewicht Mw (Gelpermeationschromatographie, Standard Polystyrol): Mw= 660.000 g/mol, Polydispersität D (Mw/Mn) = 3,5
Polymer 2: UV-polymerisiertes lösemittelhaltiges Copolymer aus 75 Teilen 2-Ethylhexylacrylat, 20 Teilen Isobornylacrylat und 5 Teilen Acrylsäure. Lösemittel: Siedegrenzbenzin 60/95, UV-Initiator: 0,35 Teile Irgacure 1800 der Fa. BASF, UV-Bestrahlung mit dotiertem Mitteldruckstrahler für ca. 40 min unter Stickstoffatmosphäre. Feststoffgehalt ca. 55%. Mittleres Molekulargewicht Mw= 310.000 g/mol, Polydispersität D = 4,6
Polymer 3: Kraton D 1161-PT der Fa. Kraton Polymers. Es handelt sich um ein lineares Styrol-Isopren-Styrol-Blockcopolymer (SIS) mit einem Styrolanteil von 15%.

Harz 1: Dertophene T 105 der Fa. DRT. Ein Terpenphenolharz mit Erweichungspunkt (Ring and Ball) von ca. 105°C.
Harz 2: Novares TA 100 der Fa. Rütgers Novares GmbH - ein phenolmodifziertes, petrostämmiges, aromatisches Kohlenwasserstoffharz. Copolymerisat ungesättigter, aromatischer C9/C10-Kohlenwasserstoffe mit Phenol.
Harz 3: Novares TN 100 der Fa. Rütgers Novares GmbH - ein petrostämmiges, aromatisches Kohlenwasserstoffharz. Copolymerisat ungesättigter, aromatischer C9/C10-Kohlen-wasserstoffe.

AO1: Alterungschutzmittel Irganox 1726 der Fa. BASF.
LM1: Mischung aus Siedegrenzbenzin 60/95 und Aceton im Gewichtsverhältnis 85:15
VI: Vernetzerlösung, bestehend aus 2,5 Teilen Trazidin VN der Fa. Tramaco und 97,5 Teilen Aceton.
Schaumträger S1: Schwarzer Polyolefinschaum der Fa. Sekisui Alveo AG, Dicke 650µm, Rohdichte 185 kg/m³. Vor der Kaschierung wird der Schaumträger zur Verbesserung der Haftung mit Coronastrahlung vorbehandelt.

### Beispiele:

### Erfinderisches Beispiel 1 (B1):

10,7 Teile Polymer 3, 21,2 Teile Harz 2 und 0,32 Teile AO1 werden im Lösemittel LM1 gelöst, damit ein Feststoffgehalt von ca. 55% resultiert. Zu der Mischung wird eine Lösung aus 65,1 Teilen Polymer 1, 19,9 Teilen Harz 1 und 16,3 Teilen LM1 gegeben.

Die Gesamtmischung wird in Labordissolver (Dispermat TU, Fa. VMA-Getzmann, mit Dissolverscheibe) für ca. 3 Minuten bei ca. 5000 U/min innig vermischt, so dass eine quasihomogene Dispersion entsteht. Diese Mischung wird innerhalb von 12 Stunden weiter verarbeitet. Zu dieser Mischung werden 4,58 Teile der Vernetzerlösung V1 homogen gemischt, Die Klebmasse wird mittels Stahlrakel auf eine silikonisierte Polyesterfolie (Dicke 50µm) ausgestrichen, zunächst bei Raumtemperatur für 10 Minuten und dann im Umluftofen für 5 min bei 110°C getrocknet. Die Strichdicke wird so gewählt, dass nach dem Trocknen ein Auftrag von ca. 90 g/m² entsteht. Diese Klebschicht besteht dann aus 41 Gew.-% Polyacrylat, 12 Gew.-% SBC und 47 Gew.-% Klebharzen. Dieser Klebefilm wird bei Raumtemperatur auf eine Seite des corona-vorbehandelten Schaumträgers S1 kaschiert. Die Rückseite des Schaumträgers wird zur Stabilisierung für die Testmethoden mit einer kleberbehaftenden Polyesterfolie (Dicke 50µm) verstärkt. Einzig für die Messung des Aufsteigenden Wärmetests wird der Klebefilm nicht auf S1, sondern auf eine coronavorbehandelte Folie aus Polyester (Dicke 50µm) kaschiert. Somit hat man für diesen Test einen temperaturbeständigen Träger, der Wert wird deshalb nur von der Klebmasse und nicht vom Trägermaterial bestimmt.

### Erfinderisches Beispiel 2 (B2):

Wie Beispiel 1, allerdings wird anstelle von Polymer 1 das Polymer 2 eingesetzt.

### Beispiel 3 (B3, Vergleichsbeispiel):

Reiner Polyacrylathaftklebstoff: 100 Teile Polymer 1 werden mit 7 Teilen V1 gemischt und wie oben beschrieben beschichtet, getrocknet und auf Schaumträger kaschiert.

### Beispiel 4 (B4, Vergleichsbeispiel):

Reiner Polyacrylathaftklebstoff: 100 Teile Polymer 2 werden mit 7 Teilen V1 gemischt und wie oben beschrieben beschichtet, getrocknet und auf Schaumträger kaschiert.

### Beispiel 5 (B5, Vergleichsbeispiel):

Polyacrylathaftklebstoff mit Terpenphenolharz: 65,1 Teile von Polymer 1 werden gemischt mit 19,9 Teilen von Harz 1 und 16,3 Teilen LM1. Als Vernetzerlösung werden 4,58 Teile V1 untergemischt und wie oben beschrieben beschichtet, getrocknet und auf Schaumträger kaschiert.

### Beispiel 6 (B6, Vergleichsbeispiel):

Polyacrylathaftklebstoff mit Terpenphenolharz und aromatischem Kohlenwasserstoffharz: 65,1 Teile von Polymer 1 werden gemischt mit 19,9 Teilen von Harz 1, 21,2 Teilen von Harz 2 und 16,3 Teilen LM1. Als Vernetzerlösung werden 4,58 Teile V1 untergemischt und wie oben beschrieben beschichtet, getrocknet und auf Schaumträger kaschiert.

### Beispiel 7 (B7, Vergleichsbeispiel):

Styrolblockcopolymer mit Tackifierharz: 10,7 Teile Polymer 3, 21,2 Teile Harz 2 und 0,32 Teile AO1 werden im Lösemittel LM1 so gelöst, dass ein Feststoffgehalt von ca. 55% resultiert. Anschließend wird wie oben beschrieben beschichtet,, getrocknet und auf Schaumträger kaschiert.

### Beispiel 8 (B8, Vergleichsbeispiel):

Blend aus Polyacrylat und Styrolblockcopolymer, ohne aromatisches Kohlenwasserstoffharz. Wie Beispiel 1 aber ohne Harz 2. Beschichtung, Trocknung und Kaschierung wie oben beschrieben.

### Referenzbeispiel 9 (B9):

Wie Beispiel 1, allerdings wird anstelle von Harz 2 das Harz 3 eingesetzt.

### Erfinderisches Beispiel 10 (B10):

Wie Beispiel 1, allerdings werden vom Polymer 3 nur 3,6 Teile eingesetzt. Die Klebschicht besteht dann aus 45 Gew.-% Polyacrylat, 4 Gew.-% SBC und 51 Gew.-% Klebharzen. Erfinderisches Beispiel 11 (B11):

Wie Beispiel 1, allerdings werden vom Polymer 3 21,4 Teile eingesetzt. Die Klebschicht besteht dann aus 36 Gew.-% Polyacrylat, 22 Gew.-% SBC und 42 Gew.-% Klebharzen.

**Tabelle**

| | Substrat | 90°-Schälfestigkeit bei 23°C | 90°-Schälfestigkeit nach Wärmelagerung | 90°-Schälfestigkeit nach Feuchtwärmelagerung | Aufsteigender Wärmetest, Substrat: Edelstahlplatte |
|---|---|---|---|---|---|
| | | N/cm | N/cm | N/cm | °C |
| B1* | Lack 1 | Ssp (> 35) | 35 (RS) | Ssp (> 35) | 120 |
| B1* | Lack 2 | Ssp (> 35) | Ssp (> 35) | Ssp (> 35) | |
| B2* | Lack 1 | Ssp (> 35) | 32 (RS) | Ssp (> 35) | 110 |
| B3⁺ | Lack 1 | 10 | 15 (KB) | 18 (KB) | 150 |
| B4⁺ | Lack 1 | 8 | 11 (KB) | 11 (KB) | 150 |
| B5⁺ | Lack 1 | 11 | 5 | 25 (KB) | 150 |
| B6⁺ | Lack 1 | Ssp (> 35) | Ssp (> 35) | Ssp (> 35) | 70 |
| B7⁺ | Lack 1 | n.m. | n.m. | n.m. | n.m. |
| B8⁺ | Lack 1 | 8 | 6 | 9 | 150 |
| B9^{x} | Lack 1 | Ssp (> 35) | 14 | 16 (KB) | 150 |
| B10* | Lack 1 | Ssp (> 35) | Ssp (> 35) | Ssp (> 35) | 110 |
| B11* | Lack 1 | Ssp (> 35) | 28 (RS) | 25 (RS) | 120 |

| | | | | | |
|---|---|---|---|---|---|
| * Erfinderisches Beispiel + Vergleichsbeispiel x Referenzbeispiel Ssp (> 35): Adhäsion ist so hoch, dass der Trägerschaum spaltet. Dieser spaltet erst oberhalb ca. 35 N/cm, d.h. der Adhäsionswert liegt über 35 N/cm; n.m.: nicht messbar, Klebmasse ist nicht haftklebrig; RS: Normalbruch, aber leichte Klebmasserückstände auf dem Substrat; KB: Kohäsionsbruch, Klebmasse spaltet in sich, oft fadenartig ablösend | | | | | |

## Patentansprüche

1. Trägerbasiertes oder trägerloses Haftklebemittel zur Verklebung auf unpolaren Oberflächen mit einer Klebmasse auf Basis Polyacrylat und Vinylaromat-Blockcopolymer, wobei die Klebmasse umfasst eine Mischung aus
a) 20-60 Gew.-% mindestens eines Polyacrylatcopolymers
b) 0,05-3 Gew.-% eines Vernetzers, bezogen auf die Polyacrylatcopolymere, und
c) 2-40 Gew.-% mindestens eines linearen Vinylaromaten-Blockcopolymers
**dadurch gekennzeichnet, dass** die Klebmasse weiterhin umfasst
d) 20-60 Gew.-% mindestens eines ersten und zweiten Klebharzes, wobei das erste Klebharz ein phenol-modifiziertes aromatisches Kohlenwasserstoffharz ist, und wobei das zweite Klebharz ein Terpenphenolharz ist.

2. Haftklebemittel gemäß Anspruch 1, **dadurch gekennzeichnet, dass** es sich bei dem linearen Vinylaromaten-Blockcopolymer um ein Elastomer aus der Gruppe der Styrol-Blockcoplymere handelt, bevorzugt aus der Gruppe der Styrol-Isopren-Blockcopolymere, der Styrol-Butadien-Blockcopolymere und/oder einem Hydrierungsprodukt dieser Blockcopolymere.

3. Haftklebemittel gemäß Anspruch 1, **dadurch gekennzeichnet, dass** die Vernetzerlösung ausgewählt wird aus den Gruppen der mehrfunktionellen Aziridine, Isocyanate, Acrylate, Epoxide, organischen Peroxide, Metallchelate oder Metallsalze.

4. Haftklebemittel gemäß Anspruch 1, **dadurch gekennzeichnet, dass** die Klebmasse in Lösemittel hergestellt wird.

5. Haftklebemittel gemäß Anspruch 1, **dadurch gekennzeichnet, dass** die Klebmasse hergestellt wird durch ein lösemittefreies Verfahren.

6. Haftklebemittel gemäß Anspruch 1, **dadurch gekennzeichnet, dass** es sich um ein trägerbasiertes, ein- oder doppelseitig haftklebend ausgerüstetes Klebeband oder Stanzteil oder ein trägerloses Transferband handelt.

7. Haftklebemittel gemäß Anspruch 6, **dadurch gekennzeichnet, dass** es um ein doppelseitig haftklebend ausgerüstetes Klebeband oder Stanzteil mit einem Schaumträger handelt.

8. Verwendung eines Haftklebemittels gemäß Anspruch 6 zur Verklebung auf Lackoberflächen.

## Claims

1. Carrier-based or carrier-free bonding adhesive agent for bonding to non-polar surfaces with a polyacrylate and vinyl aromate block copolymer-based adhesive compound, wherein the adhesive compound comprises a mixture of
20-60% by weight of at least one polyacrylate copolymer
0.05-3% by weight of a crosslinker, relative to the polyacrylate copolymers, and
2-40% by weight of at least one linear vinyl aromate block copolymer,
**characterized in that** the adhesive compound further comprises
20-60% by weight of at least a first and a second adhesive resin, wherein the first adhesive resin is a phenol-modified aromatic hydrocarbon resin, and wherein the second adhesive resin is a terpene phenolic resin.

2. Bonding adhesive agent according to claim 1, **characterized in that** the linear vinyl aromate block copolymer is an elastomer from the group of styrene block copolymers, preferably from the group of styrene isoprene block copolymers, the styrene-butadiene block copolymers and/or a hydrogenation product of these block copolymers.

3. Bonding adhesive agent according to claim 1, **characterized in that** the crosslinker solution is selected from the groups of multifunctional aziridines, isocyanates, acrylates, epoxides, organic peroxides, metal chelates or metallic salts.

4. Bonding adhesive agent according to claim 1, **characterized in that** the adhesive compound is produced in solvent.

5. Bonding adhesive agent according to claim 1, **characterized in that** the adhesive compound is produced using a solvent-free process.

6. Bonding adhesive agent according to claim 1, **characterized in that** said bonding adhesive agent is a carrier-based adhesive strip or stamped part, equipped for bonding adhesion on one or both sides, or a carrier-free transfer strip.

7. Bonding adhesive agent according to claim 6, **characterized in that** said bonding adhesive agent is an adhesive strip or stamped part, equipped for bonding adhesion on both sides, with a foam carrier.

8. Use of a bonding adhesive agent according to claim 6 for bonding to painted surfaces.

## Revendications

1. Agent autoadhésif à base d'un support ou sans support pour le collage sur des surfaces non polaires, présentant une masse adhésive à base de polyacrylate et d'un copolymère séquencé d'aromatique de vinyle, la masse adhésive comprenant un mélange constitué par
a) 20-60 % en poids d'au moins un copolymère de polyacrylate
b) 0,05-3 % en poids d'un réticulant, par rapport aux copolymères de polyacrylate et
c) 2-40 % en poids d'au moins un copolymère séquencé linéaire d'aromatique de vinyle
**caractérisé en ce que** la masse adhésive comprend en outre
d) 20-60 % en poids d'au moins une première et une deuxième résine adhésive, la première résine adhésive étant une résine hydrocarbonée aromatique modifiée par phénol et la deuxième résine adhésive étant une résine de terpène-phénol.

2. Agent autoadhésif selon la revendication 1, **caractérisé en ce qu'**il s'agit, pour le copolymère séquencé linéaire d'aromatique de vinyle, d'un élastomère du groupe des copolymères séquencés de styrène, de préférence du groupe des copolymères séquencés de styrène-isoprène, des copolymères séquencés de styrène-butadiène et/ou d'un produit d'hydrogénation de ces copolymères séquencés.

3. Agent autoadhésif selon la revendication 1, **caractérisé en ce que** la solution de réticulant est choisie parmi les groupes des aziridines, des isocyanates, des acrylates, des époxydes, des peroxydes organiques, des chélates métalliques ou des sels métalliques polyfonctionnels.

4. Agent autoadhésif selon la revendication 1, **caractérisé en ce que** la masse adhésive est préparée dans un solvant.

5. Agent autoadhésif selon la revendication 1, **caractérisé en ce que** la masse adhésive est préparée par un procédé sans solvant.

6. Agent adhésif selon la revendication 1, **caractérisé en ce qu'**il s'agit d'un ruban adhésif ou d'une pièce découpée à base d'un support, apprêté(e) de manière autoadhésive sur une ou sur deux faces, ou d'un ruban de transfert sans support.

7. Agent adhésif selon la revendication 6, **caractérisé en ce qu'**il s'agit d'un ruban adhésif ou d'une pièce découpée, apprêté(e) de manière autoadhésive sur deux faces, présentant un support en mousse.

8. Utilisation d'un agent autoadhésif selon la revendication 6 pour le collage sur des surfaces de laque.
